# EUROPÄISCHE PATENTSCHRIFT

(11) **EP 1 113 952 B1**
(45) Veröffentlichungstag und Bekanntmachung des Hinweises auf die Patenterteilung: **06.11.2002**
(21) Anmeldenummer: 99952288.1
(22) Anmeldetag: 03.08.1999
(51) Int. Cl.: B60R 21/26, B60R 21/20

(54) **AIRBAGMODUL**
AIRBAG MODULE
MODULE AIRBAG

(30) Priorität: 15.09.1998 DE 19843191
(43) Veröffentlichungstag der Anmeldung: 11.07.2001
(73) Patentinhaber: Takata-Petri AG, 63743 Aschaffenburg (DE)
(72) Erfinder: CROHN, Detlef, D-13156 Berlin (DE); SIEGMUND, Thomas, D-13595 Berlin (DE); SCHNABEL, Wilhelm, D-63843 Niedernberg (DE)
(74) Vertreter: Baumgärtel, Gunnar
(86) Internationale Anmeldenummer: DE9902430
(87) Internationale Veröffentlichungsnummer: WO00015473

(56) Entgegenhaltungen:
- EP-A- 0 773 142
- DE-A- 19 642 694
- DE-A- 19 645 373
- GB-A- 2 290 267

## Beschreibung

Die Erfindung betrifft ein Airbagmodul nach dem Oberbegriff des Anspruchs 1.

Aus der WO 96/25 309 ist ein Airbagmodul bekannt, bei dem oberhalb eines Gasgenerators ein Diffusor angeordnet ist, der eine kleinere Querschnittsfläche als der Gasgenerator aufweist. Der Gassack des Airbagmoduls erstreckt sich im gefalteten Zustand überwiegend seitlich des Diffusors und oberhalb des Diffusors liegt nur eine Lage des Gassacks. Der Diffusor weist vorwiegend seitlich, d.h., in einer Richtung, die sich quer zum Insassen erstreckt, Ausströmöffnungen auf.

Der Nachteil dieser Anordnung besteht darin, daß der Diffusor für einen Insassen eine Gefahrenqelle darstellt, wenn er beim Nichtöffnen des Gassacks oder bei bereits zusammengefallenem Gassack auf den Diffusor aufprallt.

Aus der EP 0 827 875 ist ein Lenkrad mit einem Gassack-Rückhaltesystem bekannt, bei dem der Gasgenerator in einem topfartigen Deformationselement angeordnet ist, dessen Boden über dem Gasgenerator liegt. In diesem Boden und an den Seiten des Deformationselementes sind Öffnungen für den Austritt der Gase des Gasgenerators in den Gassack vorhanden. Das Deformationselement stellt also ebenfalls einen Diffusor dar. Der Gassack erstreckt sich im gefalteten Zustand überwiegend seitlich dieses Deformationselementes und über diesem liegt nur eine Lage des Gassacks.

Diese Anordnung weist den Nachteil auf, daß wegen der im Boden befindlichen Abströmöffnung die Tendenz der Entfaltung des Gassacks direkt in Insassenrichtung besteht, was sich negativ auf einen "out of position" befindlichen Insassen auswirkt. Weiterhin ist oberhalb des Gasgenerators wegen der dort nur leicht in Richtung der Gasgeneratorachse geneigten Seitenwand des Deformationselementes kein Stauraum für den Gassack vorhanden. Das ist besonders im Lenkrad wegen des geringen vorhanden Platzes für den Airbag besonders nachteilig.

Die gattungsbildende Druckschrift EP 0 773 142 A1 beschreibt ein Airbagmodul mit einem Gassack, einem Gasgenerator und einem Diffusor, der den Gasgenerator umgibt und über den gesamten Diffusorkörper eine Vielzahl von Perforationen aufweist. Hierdurch kann der Diffusor Energie eines aufprallenden Insassen absorbieren. Nachteilig ist der gesamte Diffusorkörper mit Perforationen versehen, was eine aufwendige Lösung darstellt. Zusätzlich ist die aus der EP 0 773 142 A1 bekannte Anordnung insofern nachteilig, als wenig Stauraum für den gefalteten Gassack vorliegt und dieser sich bei der Entfaltung sogleich in Richtung des Fahrzeuginsassen entfaltet.

Der Erfindung liegt die Aufgabe zugrunde, das Airbagmodul so aufzubauen, daß es zumindest teilweise in einfacher Weise als Deformationselement ausgebildet ist, wobei oberhalb des Gasgenerators Stauraum für den gefalteten Gassack vorhanden ist und die Entfaltung des Gassacks in einer ersten Phase vor allem quer zum Insassen erfolgt.

Erfindungsgemäß wird diese Aufgabe durch ein Airbagmodul mit den Merkmalen des Anspruchs 1 gelöst.

Danach weist der Diffusor oder das Gehäuse einen im Längsschnitt stufigenförmigen Aufbau mit einem unteren Seitenwandbereich, einem oberen Seitenwandbereich und einem den oberen und den unteren Seitenwandbereich verbindenden mittleren Seitenwandbereich auf. Der Diffusor oder das Gehäuse erstreckt sich in seinem unteren Seitenwandbereich mit Abstand zum Gasgenerator und über den Gasgenerator hinaus in Richtung des Aufreißbereiches der Modulabdeckung und umschließt dabei zumindest annähernd denselben Querschnitt wie sein neben dem Gasgenerator liegender Abschnitt. In diesem Bereich ist der Querschnitt des Diffusors bzw. des Gehäuses des Gasgenerators also größer als der des Gasgenerators. In einem oberen Seitenwandbereich weist der Diffusor bzw. das Gehäuse des Gasgenerators einen geringeren Querschnitt als der Gasgenerator auf und in diesem Bereich sind Abströmöffnungen für die Gase des Gasgenerators in den Gassack quer zur Längsachse des Diffusors vorgesehen. Der untere und obere Seitenwandbereich sind durch mindestens einen mittleren verformbaren Seitenwandbereich verbunden.

Die erfindungsgemäße Anordnung weist den Vorteil auf, daß sich der über dem Gasgenerator liegende Abschnitt des Diffusors wegen seines verformbaren mittleren Seitenwandbereiches durch einen aufprallenden Insassen von diesem weg verlagern läßt, wodurch die Verletzungsgefahr vermindert wird. Da der untere Seitenwandbereich nach oben über den Gasgenerator ragt, hat der sich anschließende mittlere Seitenwandbereich auch genügend Raum für die Verformung in Richtung des Gasgenerators. Wegen des geringeren Querschnitts des Diffusors bzw. des Gehäuses des Gasgenerators oberhalb des Gasgenerators ist über diesem neben dem Diffusor bzw. Gehäuse noch Platz für die Lagerung des gefalteten Gassacks. Dadurch wird die Bauraumnutzung verbessert, so daß Vorgaben für eine eingeschränkte Modulgeometrie leichter erfüllbar sind.

Wegen der quer zur Längsachse des Diffusors liegenden Öffnungen im Diffusor bzw. Gehäuse treten die Gase quer bezüglich des Insassen in den Gassack ein und es wird eine primär laterale Gassackentfaltung erzielt. Dabei wird der Gasstrom zunächst im unteren Seitenwandbereich nach oben gelenkt und trifft auf den mittleren Seitenwandbereich. Ein Teil des Gasstromes wird in Richtung der Abströmöffnungen abgelenkt, der andere Teil wird in dem Raum oberhalb des Gasgenerators verwirbelt. Die mehrfache Umlenkung nimmt Energie aus dem Gesamtsystem, was sich positiv auf die thermische Belastung des Gassackgewebes und die Aggressivität der Gassackentfaltung auswirkt.

Der aus den Ausströmöffnungen austretende Gasstrom formt zuerst im oberen Modulbereich aus der über dem Diffusor bzw. Gehäuse befindlichen Gewebelage eine Blase, wobei dieser Vorgang durch den in diesem Bereich wegen der Diffusorabstufung vorhandenen geringen Packagedruck erleichtert wird. Anschließend erweitert sich die Blase lateral durch das schrittweise Auflösen des Gassackpackage von innen nach außen bis zur vollständigen Entfaltung.

Wegen der lateralen Entfaltung wird die Ausdehnung des Gassacks in Richtung Insassen auf ein Minimum beschränkt. Dadurch wird der Insasse in Normalposition nicht angeschossen und die Gefahr von Insassenverletzungen unter oop-Bedingungen wird minimiert. Für den Gassack werden keine Fangbänder und Reißnähte benötigt. Weiterhin werden Schwingungen des Gassacks reduziert, so daß der Gassack früher seine für den Schutz des Insassen optimale Position einnimmt.

Die Verformbarkeit des mittleren Seitenwandbereichs wird bevorzugt dadurch erreicht, daß in diesem Bereich Materialschwächungen, insbesondere in Form von Schlitzen, vorgesehen sind. Dabei weisen diese Schlitze eine Breite von zumindest annähernd Null Millimeter auf, so daß sie primär keine Abströmöffnungen für die Gase des Gasgenerators darstellen. Bei einem Diffusor mit kreisförmigem Querschnitt verlaufen die Schlitze vorzugsweise radial.

Es ist zweckmäßig, daß der obere Seitenwandbereich eine Höhe aufweist, die geringer ist als die Hälfte der Höhe des Airbagmoduls. Weiterhin ist es zweckmäßig, daß sich die Oberkante des Diffusors oder Gehäuses des Gasgenerators bis nahezu an die Modulabdeckung erstreckt. Der obere Seitenwandbereich hat zweckmäßig eine zylindrische oder konische Form.

Der Gassack ist vorzugsweise um den Diffusor herum angeordnet und über dem Diffusor befindet sich nur eine Lage des Gassacks.

In einer Ausführungsform sind im unteren Seitenwandbereich des Diffusors oder Gehäuses des Gasgenerators Vorabströmöffnungen zur Beeinflussung des Druckverlaufs vorgesehen. Die Vorabströmöffnungen sind vorzugsweise so angeordnet, daß keine Überdeckung mit den Abströmöffnungen des Gasgenerators vorliegt. Sie können z.B. oberhalb der Abströmöffnungen des Gasgenerators angeordnet sein. Der Gesamtquerschnitt der Vorabströmöffnungen sollte geringer sein als der Gesamtquerschnitt der Abströmöffnungen des Gasgenerators. In einer Ausführungsform sind vier Vorabströmöffnungen vorgesehen.

Die Erfindung soll in Ausführungsbeispielen anhand von Zeichnungen erläutert werden. Es zeigen:
- Fig. 1: einen Längsschnitt durch einen stufenförmigen Diffusor;
- Fig. 2: eine Draufsicht auf den Diffusor nach Fig. 1;
- Fig. 3: einen Längsschnitt durch ein Airbagmodudul mit einem Diffusor nach Fig. 1;
- Fig. 4: das Airbagmodul nach Fig. 3 mit teilweise entfaltetem Gassack;
- Fig. 5: einen Längsschnitt durch eine zweite Ausführungsform des Diffusors;
- Fig. 6: einen Längsschnitt durch eine dritte Ausführungsform des Diffusors;
- Fig. 7: einen Längsschnitt durch ein Airbagmodul mit einem Diffusor, der Vorabströmöffnungen aufweist.

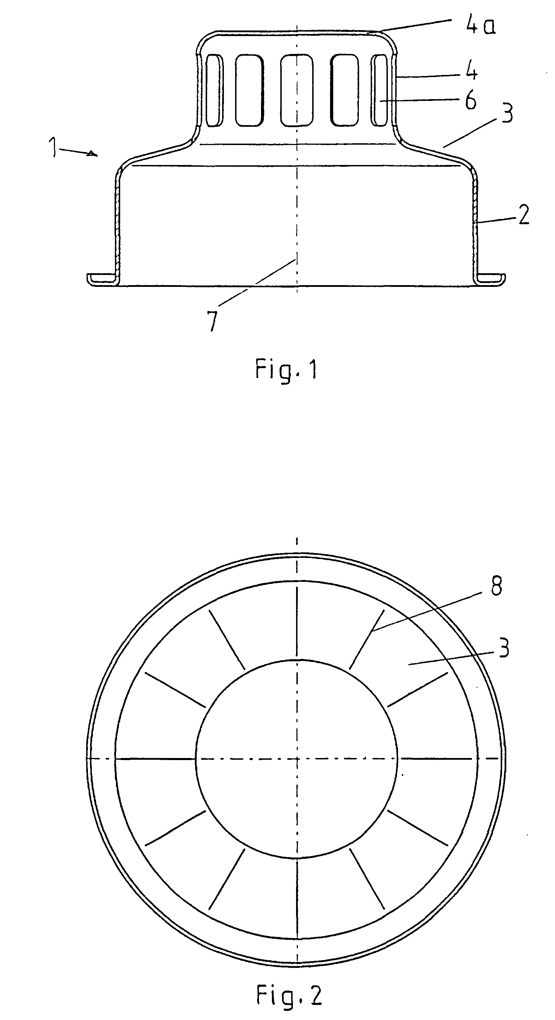

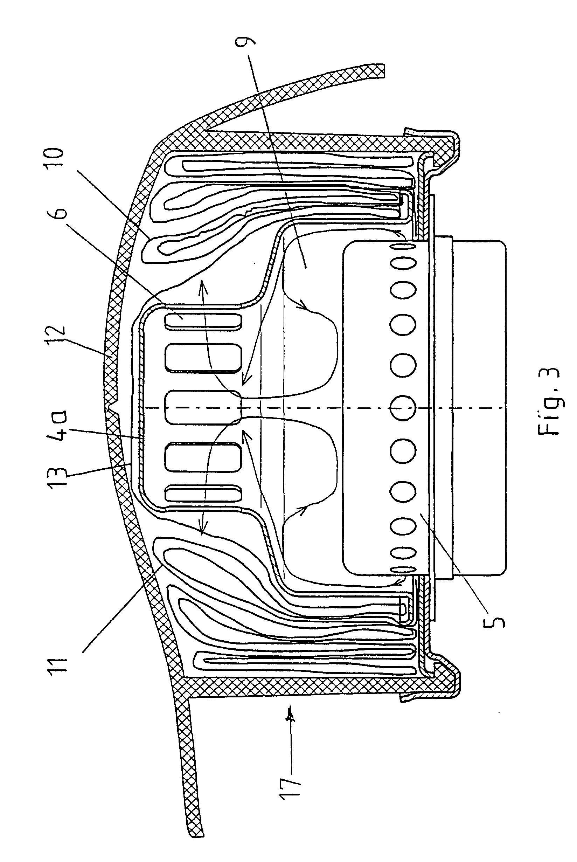

In der Fig. 1 ist ein Diffusor 1 dargestellt, der einen unteren Seitenwandbereich 2, einen mittleren Seitenwandbreich 3 und einen oberen Seitenwandbereich 4 mit einer oberen Kante 4a aufweist. Der untere Seitenwandbereich umschließt einen Raum, dessen Querschnitt größer ist als der Querschnitt eines in diesem angeordneten Gasgenerators 5 und erstreckt sich über diesen hinaus in Richtung des Insassen (Fig. 3). Der obere Seitenwandbereich 4 weist einen deutlich geringeren Querschnitt als der Gasgenerator 5 auf und ist mit länglichen Abströmöffnungen 6 versehen. Der mittlere Seitenwandbereich 3 verbindet den unteren mit dem oberen Seitenwandbereich und verläuft bezüglich der Längsachse 7 des Diffusors 1 stark geneigt. Dieser Seitenwandbereich 3 weist radial angeordnete Schlitze 8 auf, deren Breite gegen Null tendiert, so daß diese Schlitze keine Abströmöffnungen für das aus dem Gasgenerator austretende Gas darstellen. Infolge der Schlitze 8 wird dieser Seitenwandbereich 3 gezielt geschwächt, so daß er sich beim Aufprall eines Insassen auf den Diffusor in Richtung des Gasgenerators verformen kann. Da der mittlere Seitenwandbereich 3 mit Abstand über dem Gasgenerator 5 liegt, wobei dieser Abstand mehrere Zentimeter beträgt, ist zwischen beiden ein Raum 9 vorhanden, in den hinein sich der mittlere Seitenwandbereich 3 verformen kann (Fig. 3).

Wie aus der Fig. 3 ersichtlich ist, kann wegen des stufenförmigen Aufbaus des Diffusors 1 und des somit geringeren Querschnitts des Diffusors im Bereich des oberen Seitenwandbereichs 4 gegenüber dem Gasgenerator 5 ein gefalteter Gassack 10 zumindest teilweise quasi über dem Gasgenerator 5 liegen, ohne daß die Nachteile beim Entfalten eintreten, die üblicherweise bei einem über dem Gasgenerator gefalteten Gassack eintreten. Der Gassack 10 ist mit in Richtung des Insassen orientierten Falten 11 innerhalb der Modulabdeckung 12 gelagert. Über dem Diffusor befindet sich nur eine Lage 13 des Gassackes 10, die bei einem aus Ober- und Unterteil zusammengesetzten Gassack durch das Oberteil gebildet wird.

Nach Zündung des Gasgenerators 5 wird der aus diesem austretende Gasstrom am unteren Seitenwandbereich 2 nach oben gelenkt und trifft auf den mittleren Seitenwandbereich 3. Ein Teil des Gasstromes wird dort in Richtung der Abströmöffnungen 6 abgelenkt, während ein anderer Teil im Raum 9 über dem Gasgenerator verwirbelt wird. Infolge dieser Verwirbelung wird ein Teil der Energie des Gasstroms abgebaut, wodurch die thermische Belastung des Gassackgewebes verringert wird und wodurch sich der Gassack weniger aggressiv entfaltet. Der Weg der Gase ist in der Fig. 3 durch Pfeile gekennzeichnet.

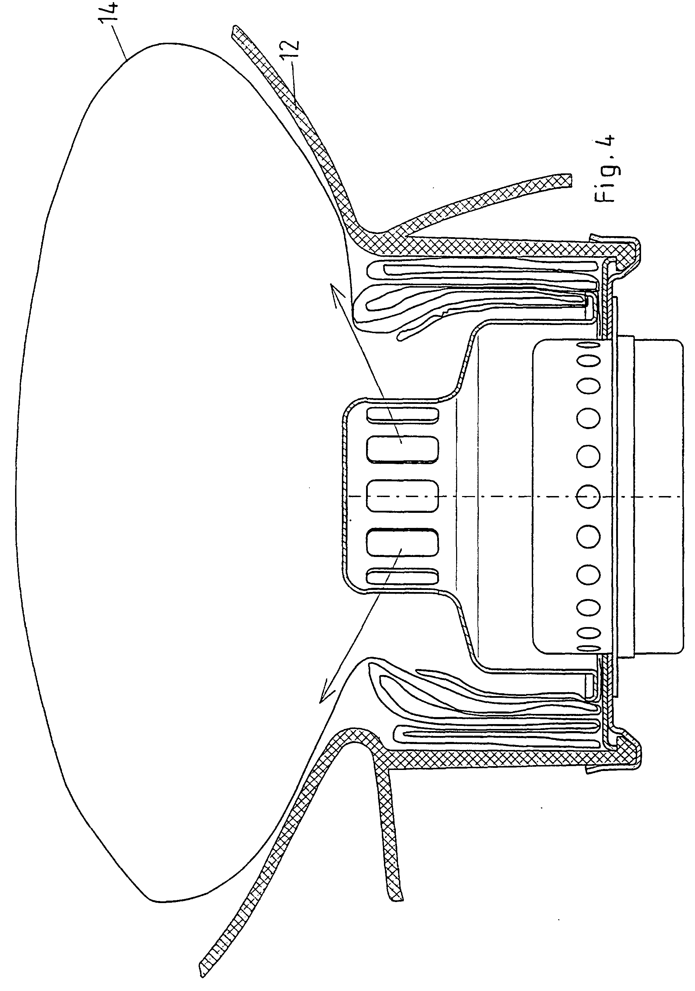

Der Gasstrom verläßt den Diffusor 1 in radialer Richtung und formt zuerst im oberen Modulbereich aus der über dem Diffusor 1 liegenden Lage 13 des Gassacks 10 eine Blase 14. Dieser Vorgang wird durch den in diesem Bereich vorhandenen geringeren Packagedruck wegen des stufenförmigen Diffusors erleichtert. In dieser ersten Phase der Entfaltung wird die Modulabdeckung 12 des Airbagmoduls 17 durch die Blase 14 aufgerissen. Anschließend erweitert sich die Blase 14 lateral durch das schrittweise Auflösen des Gassackpackage von innen nach außen (Fig. 4) bis zur vollständigen Entfaltung.

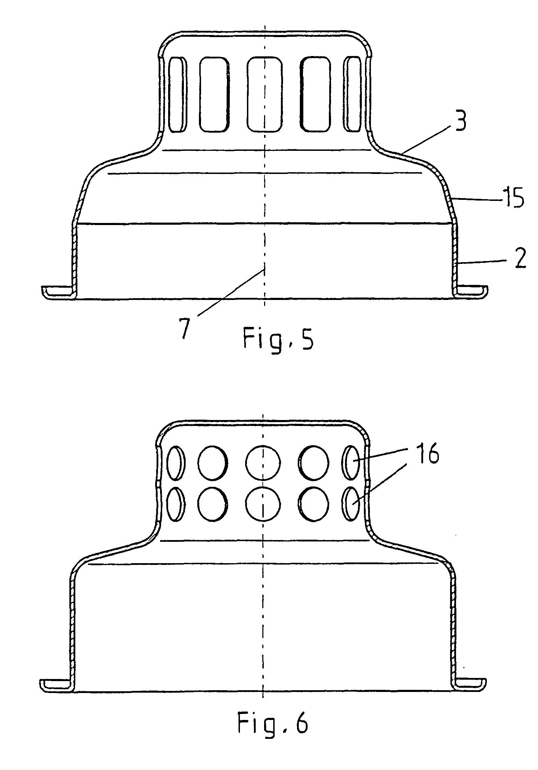

In der Fig. 5 ist eine weitere Ausführungsform des Diffusors dargestellt, bei dem der untere Seitenwandbereich 2 einen oberen Abschnitt 15 aufweist, der bezüglich der Längsachse 7 des Diffusors leicht geneigt ist. Diesem Abschnitt schließt sich dann der mittlere Seitenwandbereich 3 an.

In der Fig. 6 ist ein stufenförmiger Diffusor dargestellt, bei dem anstelle der länglichen Abströmöffnungen der vorher beschriebenen Ausführungsformen zwei Reihen übereinanderliegender kreisförmiger Abströmöffnungen 16 vorgesehen sind.

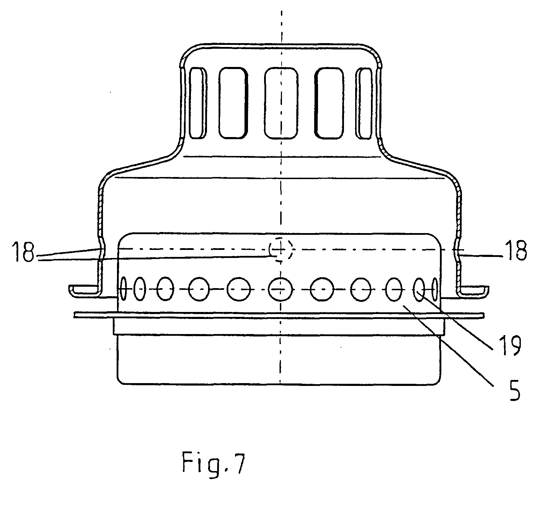

In der Fig. 7 ist ein Airbagmodul dargestellt, bei dem der Diffusor vier Vorabströmöffnungen 18 aufweist, die oberhalb der Abströmöffnungen 19 des Gasgenerators 5 angeordnet sind, d.h., diese und die Vorabströmöffnungen überdecken sich nicht. Mittels dieser Vorabströmöffnungen 18 kann der Druckverlauf im Gassack zusätzlich beeinflußt werden.

## Patentansprüche

1. Airbagmodul mit einem Gassack, einem Gasgenerator (5) und einer Modulabdeckung (12), deren Aufreißbereich oberhalb des Gasgenerators (5) angeordnet ist, wobei der Gasgenerator (5) in einem Diffusor (1) oder einem den Gasgenerator (5) umgebenden Gehäuse mit Abströmöffnungen angeordnet ist und sich der Diffusor (1) oder das Gehäuse in einem Seitenwandbereich (2) mit Abstand zum Gasgenerator (5) erstreckt, sich der Seitenwandbereich (2) dabei über den Gasgenerator (5) hinaus nach oben in Richtung des Aufreißbereichs der Modulabdeckung (12) erstreckt und zumindest annähernd denselben Querschnitt umschließt wie sein neben dem Gasgenerator liegender Abschnitt,
**dadurch gekennzeichnet,**
**daß** der Diffusor (1) oder das Gehäuse einen stufenförmigen Aufbau mit einem unteren Seitenwandbereich (2), einem oberen Seitenwandbereich (4) und einem den oberen (4) und den unteren Seitenwandbereich (2) verbindenden mittleren Seitenwandbereich (3) aufweist, wobei sich der Diffusor (1) oder das Gehäuse in seinem unteren Seitenwandbereich (2) mit Abstand zum Gasgenerator (5) und über den Gasgenerator (5) hinaus in Richtung des Aufreißbereichs der Modulabdeckung (12) erstreckt, der Diffusor (1) bzw. das Gehäuse in dem oberen Seitenwandbereich (4) eine geringere Querschnittsfläche als der Gasgenerator (5) aufweist und in diesem Bereich Abströmöffnungen (6, 16) für die Gase des Gasgenerators in den Gassack (10) quer zur Längsachse des Diffusors (1) vorgesehen sind, und wobei der mittlere Seitenwandbereich (3) verformbar ausgebildet ist.

2. Airbagmodul nach Anspruch 1, **dadurch gekennzeichnet, daß** der mittlere Seitenwandbreich (3) Materialschwächungen aufweist.

3. Airbagmodul nach Anspruch 1 oder 2, **dadurch gekennzeichnet, daß** der mittlere Seitenwandbereich (3) Schlitze (8) als Materialschwächungen aufweist.

4. Airbagmodul nach Anspruch 3, **dadurch gekennzeichnet, daß** die Schlitze (8) eine Breite von annähernd Null Millimeter aufweisen.

5. Airbagmodul nach Anspruch 3 oder 4, **dadurch gekennzeichnet, daß** die Schlitze (8) bei einem Diffusor (1) mit kreisförmigem Querschnitt radial verlaufen.

6. Airbagmodul nach mindestens einem der vorhergehenden Ansprüche, **dadurch gekennzeichnet, daß** der obere Seitenwandbereich (4) eine Höhe aufweist, die geringer ist als die Hälfte der Höhe des Airbagmoduls (17).

7. Airbagmodul nach mindestens einem der vorhergehenden Ansprüche, **dadurch gekennzeichnet, daß** der obere Seitenwandbereich (4) zylindrisch oder konisch verläuft.

8. Airbagmodul nach mindestens einem der vorhergehenden Ansprüche, **dadurch gekennzeichnet, daß** sich die Oberkante (4a) des Diffusors (1) oder Gehäuses des Gasgenerators bis nahezu an die Modulabdeckung (12) erstreckt.

9. Airbagmodul nach mindestens einem der vorhergehenden Ansprüche, **dadurch gekennzeichnet, daß** der Gassack (10) um den Diffusor (1) herum angeordnet ist und daß sich über dem Diffusor (1) nur eine Lage (13) des Gassacks befindet.

10. Airbagmodul nach mindestens einem der vorhergehenden Ansprüche, **dadurch gekennzeichnet, daß** im unteren Seitenwandbereich (2) des Diffusors oder Gehäuses des Gasgenerators Vorabströmöffnungen (18) vorgesehen sind.

11. Airbagmodul nach Anspruch 10, **dadurch gekennzeichnet, daß** die Vorabströmöffnungen (18) so angeordnet sind, daß keine Überdeckung mit den Abströmöffnungen (19) des Gasgenerators (5) vorliegt.

12. Airbagmodul nach Anspruch 10 oder 11, **dadurch gekennzeichnet, daß** die Vorabströmöffnungen (18) oberhalb der Abströmöffnungen (19) des Gasgenerators (5) vorgesehen sind.

13. Airbagmodul nach mindestens einem der Ansprüche 10 bis 12, **dadurch gekennzeichnet, daß** der Gesamtquerschnitt der Vorabströmöffnungen (18) geringer ist als der Gesamtquerschnitt der Abströmöffnungen (19) des Gasgenerators (5).

14. Airbagmodul nach mindestens einem der Ansprüche 10 bis 13, **dadurch gekennzeichnet, daß** vier Vorabströmöffnungen (18) vorgesehen sind.

## Claims

1. Airbag module with a gas bag, gas generator (5) and a module cover (12) whose tear-open area is arranged above the gas generator (5) wherein the gas generator (5) is mounted in a diffuser (1) or a housing which encloses the gas generator (5) and is provided with outflow openings, and the diffuser (1) or the housing extends in a side wall area (2) at a distance from the gas generator (5), the side wall area (2) thereby extends beyond the gas generator (5) upwards towards the tear-open area of the module cover (12) and encloses at least substantially the same cross-section as its section lying next to the gas generator,
**characterised in that**
the diffuser (1) or the housing has a stepped construction with a lower side wall area (2), an upper side wall area (4) and a central side wall area (3) which connects the upper side wall area (4) and the lower side wall area (2), wherein the diffuser (1) or the housing extends in its lower side wall area (2) at a distance from the gas generator (5) and beyond the gas generator (5) towards the tear-open area of the module cover (12), the diffuser (1) or the housing has in an upper side wall area (4) a smaller cross-sectional surface than the gas generator (5) and in this area outflow openings (6, 16) are provided for the gases of the gas generator to discharge into the gas bag (10) transversely to the longitudinal axis of the diffuser, and wherein the central side wall area (3) is designed to be deformable.

2. Airbag module according to claim 1 **characterised in that** the central side wall area (3) has material weaknesses.

3. Airbag module according to claim 1 or 2 **characterised in that** the central side wall area (3) has slits (8) as the material weaknesses.

4. Airbag module according to claim 3 **characterised in that** the slits (8) have a width of at least approximately zero millimetres.

5. Airbag module according to claim 3 or 4 **characterised in that** the slits (8) run radially in the case of a diffuser (1) having a circular cross-section.

6. Airbag module according to at least one of the preceding claims **characterised in that** the upper side wall area (4) has a height which is less than half the height of the airbag module (17).

7. Airbag module according to at least one of the preceding claims **characterised in that** the upper side wall area (4) runs cylindrical or conical.

8. Airbag module according to at least one of the preceding claims **characterised in that** the upper edge (4a) of the diffuser (1) or housing of the gas generator extends practically up to the module cover (12).

9. Airbag module according to at least one of the preceding claims, **characterised in that** the gas bag (10) is arranged around the diffuser (1) and that only one layer (13) of the gas bag is located above the diffuser (1).

10. Airbag module according to at least one of the preceding claims **characterised in that** preliminary outflow openings (18) are provided in the lower side wall area (2) of the diffuser or housing of the gas generator.

11. Airbag module according to claim 10 **characterised in that** the preliminary outflow openings (18) are arranged so that there is no overlap with the outflow openings (19) of the gas generator (5).

12. Airbag module according to claim 10 or 11 **characterised in that** the preliminary outflow openings (18) are provided above the outflow openings (19) of the gas generator (5).

13. Airbag module according to at least one of claims 10 to 12 **characterised in that** the overall cross-sectional area of the preliminary outflow openings (18) is smaller than the overall cross-sectional area of the outflow openings (19) of the gas generator (5).

14. Airbag module according to at least one of claims 10 to 13 **characterised in that** four preliminary outflow openings (18) are provided.

## Revendications

1. Module d'airbag comportant un sac à gaz, un générateur de gaz (5) et une couverture de module (12) dont la zone de déchirure est agencée au-dessus du générateur de gaz (5), le générateur de gaz (5) étant agencé dans un diffuseur (1) ou dans un boîtier entourant le générateur de gaz (5) et pourvu d'ouvertures de sortie et le diffuseur (1) ou le boîtier s'étendant dans une zone de paroi latérale (2) à distance du générateur de gaz (5), la zone de paroi latérale (2) s'étendant ici au-delà du générateur de gaz (5) vers le haut en direction de la zone de déchirure de la couverture de module (12) et entourant au moins approximativement la même section que son tronçon situé à côté du générateur de gaz, **caractérisé en ce que** le diffuseur (1) ou le boîtier présente une structure en gradins comportant une zone inférieure de paroi latérale (2), une zone supérieure de paroi latérale (4) et une zone médiane de paroi latérale (3) reliant la zone de paroi latérale supérieure (4) et la zone de paroi latérale inférieure (2), le diffuseur (1) ou le boîtier s'étendant, dans sa zone inférieure de paroi latérale (2), à distance du générateur de gaz (5) et au-delà du générateur de gaz (5) en direction de la zone de déchirure de la couverture de module (12), le diffuseur (1) ou le boîtier présentant dans la zone supérieure de paroi latérale (4) une surface de section plus petite que celle du générateur de gaz (5), des ouvertures de sortie (6, 16) étant prévues dans cette zone pour les gaz du générateur de gaz dans le sac à gaz (10) perpendiculairement à l'axe longitudinal du diffuseur (1), et la zone médiane de paroi latérale (3) étant réalisée déformable.

2. Module d'airbag selon la revendication 1, **caractérisé en ce que** la zone médiane de paroi latérale (3) présente des affaiblissements dans le matériau.

3. Module d'airbag selon la revendication 1 ou 2, **caractérisé en ce que** la zone médiane de paroi latérale (3) présente des fentes (8) à titre d'affaiblissements dans le matériau.

4. Module d'airbag selon la revendication 3, **caractérisé en ce que** les fentes (8) présentent une largeur d'approximativement zéro millimètre.

5. Module d'airbag selon la revendication 3 ou 4, **caractérisé en ce que** pour un diffuseur (1) de section circulaire les fentes (8) s'étendent radialement.

6. Module d'airbag selon au moins l'une des revendications précédentes, **caractérisé en ce que** la zone supérieure de paroi latérale (4) présente une hauteur qui est plus petite que la moitié de la hauteur du module d'airbag (17).

7. Module d'airbag selon au moins l'une des revendications précédentes, **caractérisé en ce que** la zone supérieure de paroi latérale (4) s'étend sous forme cylindrique ou conique.

8. Module d'airbag selon au moins l'une des revendications précédentes, **caractérisé en ce que** l'arête supérieure (4a) du diffuseur (1) ou du boîtier du générateur de gaz s'étend pratiquement jusqu'à la couverture de module (12).

9. Module d'airbag selon au moins l'une des revendications précédentes, **caractérisé en ce que** le sac à gaz (10) est agencé autour du diffuseur (1), et **en ce qu'**une seule couche (13) du sac à gaz se trouve au-dessus du diffuseur (1).

10. Module d'airbag selon au moins l'une des revendications précédentes, **caractérisé en ce que** des ouvertures de sortie préalable (18) sont prévues dans la zone inférieure de paroi latérale (2) du diffuseur ou du boîtier du générateur de gaz.

11. Module d'airbag selon la revendication 10, **caractérisé en ce que** les ouvertures de sortie préalable (18) sont ménagées de telle sorte qu'il n'y a pas de chevauchement avec les ouvertures de sortie (19) du générateur de gaz (5).

12. Module d'airbag selon la revendication 10 ou 11, **caractérisé en ce que** les ouvertures de sortie préalable (18) sont prévues au-dessus des ouvertures de sortie (19) du générateur de gaz (5).

13. Module d'airbag selon au moins l'une des revendications 10 à 12, **caractérisé en ce que** la section totale des ouvertures de sortie préalable (18) est plus petite que la section totale des ouvertures de sortie (19) du générateur de gaz (5).

14. Module d'airbag selon au moins l'une des revendications 10 à 13, **caractérisé en ce qu'**il est prévu quatre ouvertures de sortie préalable (18).
